Europäisches Patentamt

(19) European Patent Office

Office européen des brevets

(11) Publication number : **0 300 669 B1**

(12) **EUROPEAN PATENT SPECIFICATION**

(45) Date of publication of patent specification :
02.01.92 Bulletin 92/01

(51) Int. Cl.⁵ : **B62D 25/12**

(21) Application number : **88306379.4**

(22) Date of filing : **13.07.88**

(54) Trunk lid hinge and spring assembly.

(30) Priority : **20.07.87 US 75408**

(43) Date of publication of application :
**25.01.89 Bulletin 89/04**

(45) Publication of the grant of the patent :
**02.01.92 Bulletin 92/01**

(84) Designated Contracting States :
**DE FR GB IT SE**

(56) References cited :
**DE-A- 3 426 287**
**US-A- 3 171 156**
**US-A- 4 206 944**

(73) Proprietor : **PERFECTION SPRING &**
**STAMPING CORPORATION**
**P.O. Box 275**
**Mt. Prospect Illinois 60056 (US)**

(72) Inventor : **Seyler, Peter G.**
**2546 Sheila Avenue**
**Franklin Park Illinois 60131 (US)**

(74) Representative : **McCall, John Douglas et al**
**W.P. THOMPSON & CO. Coopers Building**
**Church Street**
**Liverpool L1 3AB (GB)**

## Description

This invention relates to a hinge and spring assembly for a trunk lid of an automotive vehicle.

In an effort to provide counterbalancing mechanisms that exert just enough force to offset the unsupported and gradually-diminishing weight of an automotive trunk lid, as such a lid is shifted from a lowered position to a fully raised position, manufacturers have developed relatively complex multi-link hinge and spring assemblies. Such complexities have been further increased in those constructions where remote unlatching of such a lid is desired and where the lid is to pop open a short distance when the remote control is actuated. These complexities have led to undesirably high manufacturer and user costs, objectional bulk and weight and, at least in some instances, increased possibilities of malfunctioning and the need for later repair, adjustment, or replacement. In those cases where an aftermarket modification of a vehicle is desired that would effectively increase the weight of a trunk lid, such as the addition of a luggage rack or a rear spoiler, adjustment or replacement of the counterbalancing mechanism to offset the increase in trunk weight may be difficult, expensive, and possibly dangerous.

Some manufacturers, in an effort to reduce the complexities and costs of providing lids with a pop-open feature, have taken advantage of the recovery forces exerted by the resilient weather strip(s) extending about the edges of a trunk lid or trunk opening ; however, such an arrangement is not always effective (the extent of lid opening may vary with age of the sealing strip, with ambient temperature, or with lid size and weight) and may not in any case open the lid sufficiently to suit the need and convenience of users.

US-A-4206944 discloses a hinge and spring assembly for a lid for a car trunk comprising a mounting plate adapted to be secured to a body wall of a vehicle ; a trunk lid connecting arm having a first end portion pivotally mounted upon said plate for movement of said arm between a lowered position and a fully raised position ; said arm having a second end portion adapted to be fixed to the underside of a trunk lid for movement of said lid between closed and open positions as said arm pivots between its lowered and fully raised positions ; a tension coil spring having one end connected to said arm at a point adjacent said first end portion and having its opposite end connected to said plate so that said spring is maintained in a longitudinally stretched and tensioned condition to exert a lifting force for offsetting the weight of a trunk lid when connected to said arm.

An important aspect of this invention therefore lies in the discovery that a highly effective counterbalancing and lifting mechanism may be achieved without the provision of multiple linkages and complex mechanisms. Only a single tension coil spring is used for each hinge assembly. The diminishing unsupported weight of a trunk lid, as that lid is shifted from a lowered to a fully raised position, may be closely matched by the diminishing return force exerted by a tension coil spring, so that a pair of hinge and spring assemblies mounted on opposite sides of a vehicle body within the trunk compartment may effectively counterbalance the weight of a trunk lid at any selected open position.

According to the present invention there is provided a hinge and spring assembly for the trunk lid of an automotive vehicle, comprising a mounting plate adapted to be secured to a body wall of a vehicle ; a trunk lid connecting arm having a first end portion pivotally mounted upon said plate for movement of said arm between a lowered position and a fully raised position ; said arm having a second end portion adapted to be fixed to the underside of a trunk lid for movement of said lid between closed and open positions as said arm pivots between its lowered and fully raised positions ; a tension coil spring having one end connected to said arm at a point adjacent said first end portion and having its opposite end connected to said plate so that said spring is maintained in a longitudinally stretched and tensioned condition to exert a lifting force for offsetting the weight of a trunk lid when connected to said arm ; means mounted upon said plate for engaging at least one coil of said spring for laterally deflecting and distorting said spring to increase its lifting force over a limited arc of pivotal movement of said arm between said lowered position and an intermediate partially-raised position, thereby urging a trunk lid into a partially opened condition when unlatched.

The present invention also provides an automotive vehicle having a body, a trunk compartment and opening therefor, a lid for closing said trunk opening, and a pair of hinge and spring assemblies in accordance with this invention, said mounting plates being secured to opposite sides of said vehicle within said trunk compartment.

Ideally, the spring mountings are adjustable so that at the option of the manufacturer or user the spring assemblies may exert a lifting force that is just sufficient to hold the lid at any selected open position or, alternatively, is slightly greater than the force required to counterbalance the lid so that the lid, once unlatched, opens gradually into a fully raised position. Friction-operating means are provided by the hinges to hold the lid in an open position until a force of a selected magnitude (preferably 5 to 10 pounds) is exerted to cause downward movement of the lid.

A further aspect of this invention lies in the discovery that the lifting force of a tension coil spring may be augmented or increased at the lower limits of travel of the lid by deflecting or distorting the spring laterally as the lid approaches and reaches its fully closed position. Such deflection and the increased spring tension resulting from it overcompensate for the unsupported weight of the lid so that when the lid is unlatched the spring force will cause it to pop open a limited extent until the spring assumes a linear or undeflected condition. A single spring for each assembly therefore performs dual functions of counterbalancing the weight of the lid and also causing the lid to partially open when unlatched.

The invention will now be further described by way of example, with reference to the accompanying drawings, in which :

Figure 1 is a fragmentary longitudinal vertical sectional view through the rear portion of an automotive vehicle illustrating one of the trunk lid hinge assemblies embodying the present invention, the trunk lid being illustrated in fully closed position.

Figure 2 is a sectional view similar to Figure 1 but showing the trunk lid in a partially raised position.

Figure 3 is a similar sectional view showing the lid in fully raised position.

Figure 4 is a fragmentary exploded perspective view illustrating components of the hinge assembly.

Figure 5 is an enlarged fragmentary longitudinal sectional view illustrating the lateral deflection of the spring when the lid is fully closed as indicated in Figure 1.

Figure 6 is an enlarged fragmentary sectional view similar to Figure 5 but showing the condition of the spring when the lid is partially raised as in Figure 2.

Figure 7 is an enlarged vertical sectional view taken along line 7-7 of Figure 5.

Figure 8 is a graph comparing the moment of force exerted by gravity on a trunk lid with the opposing force exerted by a counterbalancing spring assembly embodying this invention.

Figure 9 is a fragmentary longitudinal vertical sectional view through the rear portion of an automotive vehicle illustrating a trunk lid hinge assembly constituting a second embodiment of this invention.

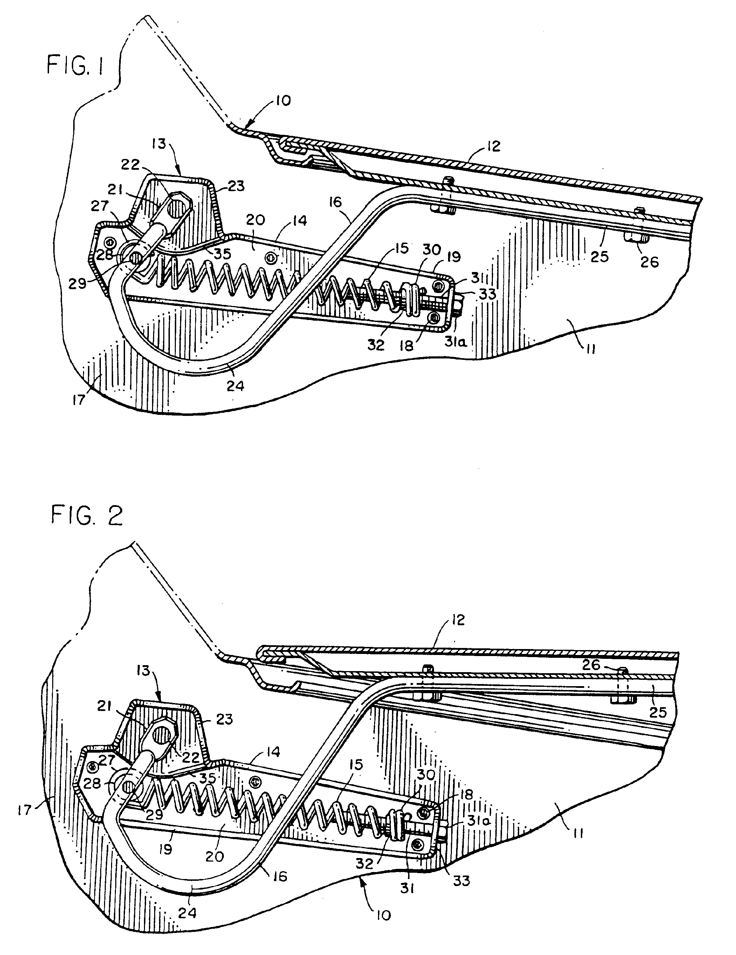

Referring to Figures 1-7, the numeral 10 generally designates an automotive vehicle having a trunk compartment 11 accessible through an opening normally closed by lid 12. Within the compartment on each side of the vehicle is a hinge assembly 13. Only one of the assemblies is shown ; the other is of the same construction and operation except that it is a mirror image of the assembly depicted in Figure 1.

Each hinge assembly 13 includes a mounting member or plate 14, a coil tension spring 15, and a connecting arm 16. The plate 14 may be stamped from sheet metal and is secured to side wall 17 of the vehicle by screws 18 or by any other suitable means. A flange 19 extends about the periphery of the plate 14 to reinforce that plate and also to define a cavity 20 that at least partially receives coil spring 15.

The trunk lid connecting arm 16 has a first end portion 21 pivotally connected by pivot pin 22 (preferably in the form of a rivet) to upstanding portion 23 of the mounting plate 14. The arm also includes a curved intermediate portion 24 and a second end portion 25 secured by screws 26 or other appropriate attachment means to the underside of trunk lid 12.

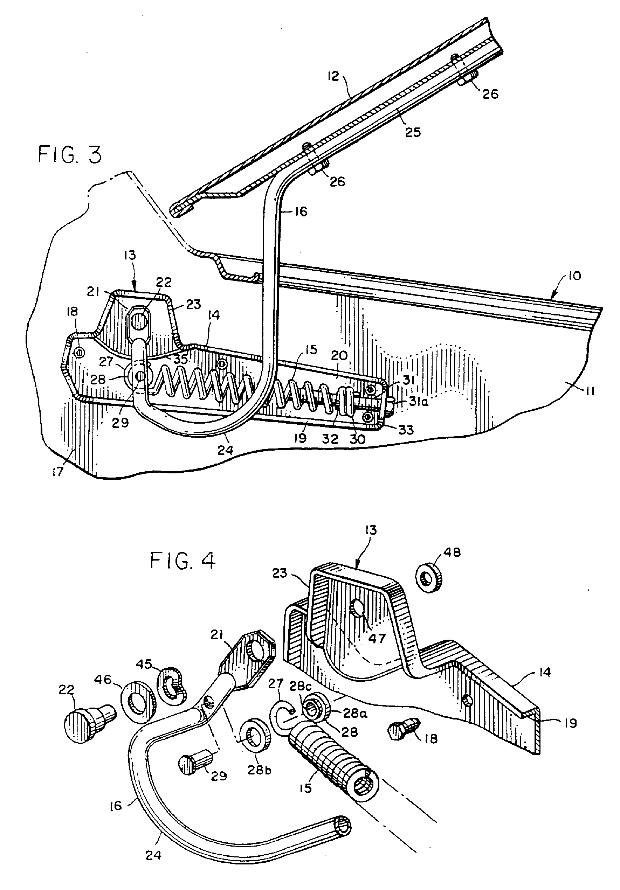

As shown in the drawings, arm 16 pivots about a horizontal pivot axis as the lid swings from a fully closed position (Figure 1) into a partially opened position Figure 2) and, finally, into a fully opened position (Figure 3). While a range of angular movement may vary depending on the design of the vehicle, the angular distance between fully opened and fully closed positions should generally fall within the range of about 45 to 65°. A range of approximately 55° is shown in the drawings.

The helical tension spring 15 has a hook 27 at one end that extends about a roller or sheave 28 rotatably carried by mounting pin 29. In Figure 4, the roller is shown to be composed of two parts or sections 28a and 28b with section 28b taking the form of a washer that fits over the reduced cylindrical portion of section 28a, and with section 28a having a bore 28c therethrough for rotatably receiving the shank of pin 29. The roller is retained on the pin by swaging the end of the pin or by any other appropriate means.

The opposite end 30 of the spring is connected to the mounting plate 14 at a remote point so that the spring is stretched to a greater or lesser extent depending on whether the trunk lid is closed or opened. The spring is under maximum tension when the lid is closed (Figure 1) and under a minimum preload tension when the lid is fully raised (Figure 3). It will be noted that when the lid is in its lowered position, it is generally horizontal and its center of gravity is displaced horizontally from hinge pin 22 to a maximum extent. Therefore, the proportion of its weight not supported directly by pin 22 is also at a maximum. As the lid swings upwardly, the proportion of such unsupported weight (i.e., the weight not directly supported by pin 22 is gradually diminished, reaching a minimum value when the trunk lid is fully raised (Figure 3). In that position, the center of gravity of the trunk lid is disposed above hinge pin 22 and has reached its closest horizontal distance to the axis of that hinge. Although the force exerted by spring 15 diminishes as the lid is raised, the spring force needed to counterbalance the unsupported weight of the lid also diminishes as the lid is raised. It has been found that by selecting springs of the proper size and strength, and by adjusting the tension of such springs, a pair of assemblies of the type generally shown in the drawings may effectively counterbalance a trunk lid so that it will remain in any selected open position between the partially open position of Figure 2 and the fully open position of Figure 3. Alternatively, by slightly increasing the tension of the springs, the compensating force may be increased to the point that the lid will slowly raise without interruption into fully open position when unlatched and released.

Adjustment of the tension of spring 15 is achieved by rotating head 31a of threaded draw bar or bolt 31. The threaded shank of the bolt is received by an internal nut 32 secured by welding or by any other suitable means within the coils of the end portion 30 of the spring. Reference may be had to co-owned patent 4,529,179 (the disclosure of which is included by reference herein) for details of the construction of such internal nut and its relationship with bolt 31 and spring 15. The shank of the bolt passes through an opening in end wall 33 of plate 14, and the head 31a engages the end wall to hold the bolt against longitudinal movement in response to spring tension.

When the spring 15 is in the stretched condition depicted in Figure 2, it has almost reached a condition of maximum extension. Ideally, the condition is a stable one to the extent that the force exerted by the spring is just sufficient to offset or equal the unsupported weight of the trunk lid. If left undisturbed, the lid would remain in the position shown in Figure 2 or, as already explained, the draw bar 31 might be adjusted to slightly increase the tension of the spring and cause the lid to shift slowly upwardly from the position shown in the drawing. In any case, the force exerted by the spring when the lid is in the position of Figure 2 is one half of the total force needed to compensate or slightly overcompensate for the otherwise unsupported weight of the lid 12, it being kept in mind that assembly 13 is one of two substantially identical assemblies used to support and counterbalance the lid.

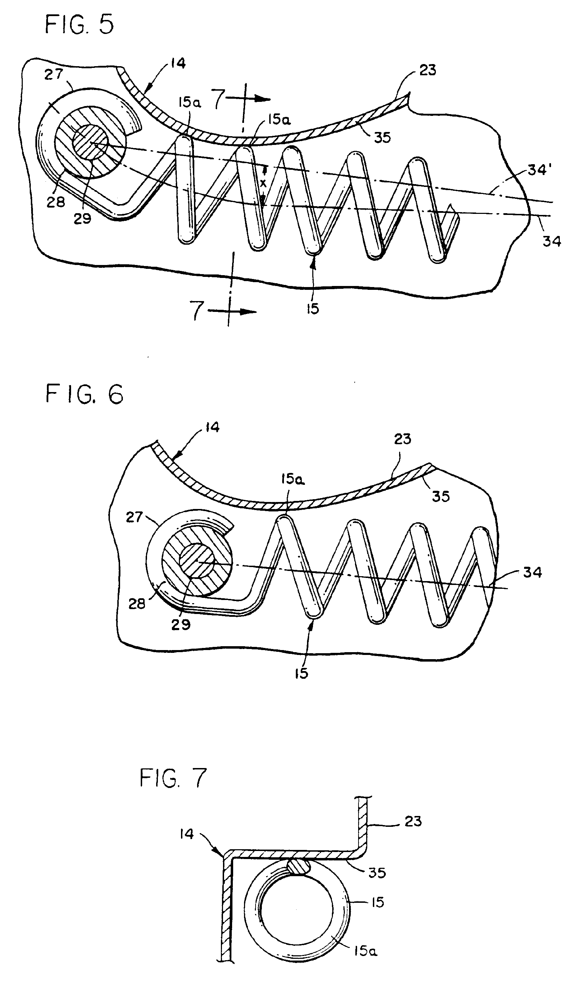

Referring to Figures 6 and 2, it will be observed that when the lid is in its partially-open position, or in any position of greater opening (to and including the fully opened position of Figure 3), the spring is in a linear condition. Phantom line 34 in Figure 6, which represents the longitudinal axis of the coil spring, is a straight line revealing that all of the coils of the spring are in coaxial alignment. Although the coils of the spring adjacent hook 27 are in close proximity to the undersurface 35 of the mounting plate's upstanding portion 23, or may even contact that undersurface, no lateral (downward) deflection or distortion of the spring has occurred. However, as the lid is urged downwardly from the position of Figures 2, 6, pin 29 and roller 28 carry the hook end of the spring in an upwardly sweeping path. The result is that at least one of the coils 15a adjacent hook 27 is shifted upwardly into engagement with the curved undersurface 35 (Figures 5, 7, 1). If it were not for the spring abutting and deflecting surface portion 35, the longitudinal axis of the spring would simply be displaced upwardly but would remain linear, as indicated by line 34' in Figure 5. However, the undersurface prevents retention of such linearity, instead producing a lateral deflection or distortion of the spring resulting in a curvature of its longitudinal axis as indicated by line 34. In effect, the hook end of the spring is wrapped to a limited extent about the curved spring-deflecting surface 35. In addition to the imposed curvature, the spring must extend longitudinally to accommodate the lateral deflection "x" imposed by camming surface 35. The result is that the rate of tensioning of the spring 15 is markedly increased over the limited arc of travel between the partially closed position of the lid (Figures 2, 6) and lid's fully closed position (Figures 1, 5, 7). Conversely, the force exerted by the spring over that limited arc of travel is substantially greater than needed to counterbalance the weight of the trunk lid. A fully closed lid, when unlatched and unrestrained by external forces, will therefore swing upwardly into the partially open position of Figures 2 and 6 to relieve the lateral distortion imposed on the spring, at which point the spring again assumes a linear condition. The deflection or distortion of the spring as the trunk lid approaches fully closed position therefore provides the added tensioning required to cause the lid to pop open a limited extent when unlatched. In terms of angular distance, the limited arc of such movement would normally be 15° or less, preferably about 10°. A 10° arc of movement for a trunk lid of a typical vehicle of standard size is equivalent to an opening distance of about 2 to 4 inches. A user may therefore easily insert his/her fingers beneath the rear flange or panel of the trunk lid, even when wearing gloves or mittens, for the purpose of swinging the lid into fully opened position. Also, such distance is sufficient to make it readily apparent to anyone viewing the vehicle that the lid is in its unlatched and partially-open condition.

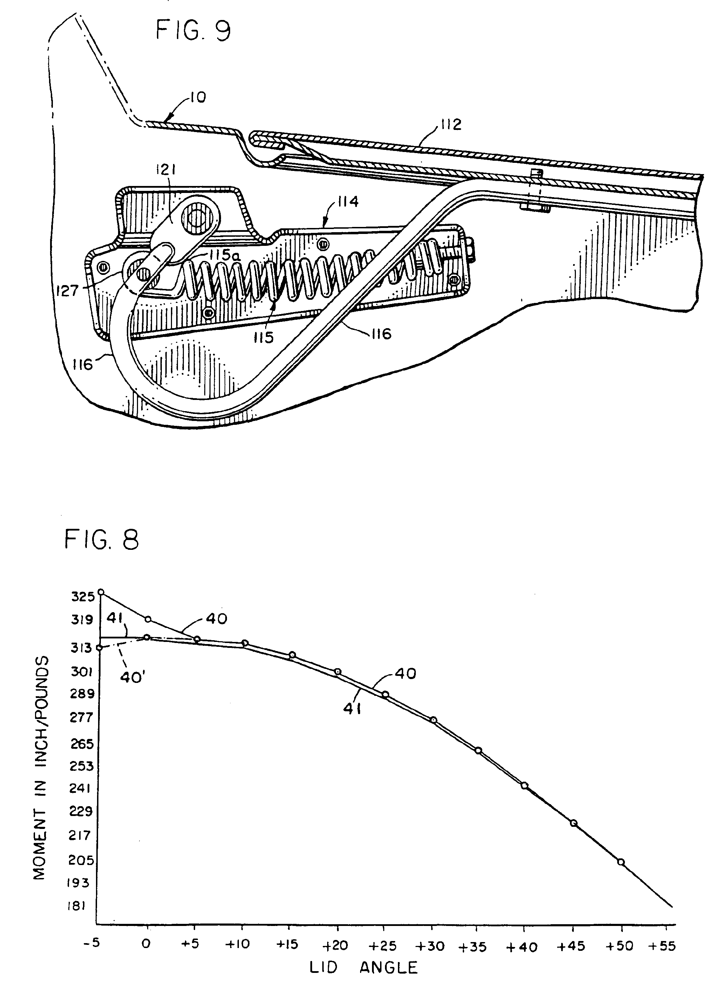

Figure 8 is a graph comparing the moments of force exerted by gravity on a sample trunk lid, and the moments of force exerted by the coil springs of a pair of spring assemblies, when the lid is at incremental angular distances ranging between minus 5° from the horizontal (a downwardly-sloping fully closed position) to plus 55° from the horizontal (a fully opened or raised position). The partially-opened position represented in Figures 2 and 6 occurs at approximately plus 5°.

Between open positions of plus 5° to plus 55°, the force exerted by the springs 15 remains within 3% of the force required for counterbalancing the weight of the lid. Such a close match means that the springs, when so adjusted, will hold the lid in any selected angular position between partially open and fully open positions in the absence of any externally applied forces. It will be observed, however, that line 40, representing the moment in inch/pounds exerted by the springs, diverges from line 41, representing the moment of force exerted by gravity on the lid, for angular positions of the lid less than plus 5°. Thus, as the lid is closed beyond the partially-open position depicted in Figures 2 and 6, the force exerted by the laterally-deflected spring increases substantially beyond that required to offset the force of gravity. For comparison purposes the phantom line 40' extending between angular positions of plus 5° to minus 5° indicates the force that would be exerted by springs 15 if longitudinal extension continued but lateral deflection did not occur -- that is, if the camming surfaces 35 of the mounting plates 14 were omitted but all other elements remained as disclosed.

It is to be understood that while the graph of Figure 8 illustrates what may be considered proper spring adjustment for usual operating conditions, the draw bolts 31 may be tightened to increase spring tension so that line 40 is spaced sufficiently above line 41 over the range of angular positions from plus 5° to plus 55° to overcompensate for the force of gravity. The result is that when unlatched, the trunk lid will immediately pop open to its partially raised position (plus 5°) and will then continue to lift slowly without interruption into its fully raised position. Since the heads 31a of the draw bolts 31 are readily accessible within the trunk compartment, such adjustment to suit the needs and preferences of users may be easily made by the manufacturer, dealer, serviceman, or user. Thus, a user wishing to add a luggage rack or bicycle rack to a trunk lid may readily adjust the tension of the springs to provide the desired counterbalancing effect. Upon removal of such items, the spring tension may again be readjusted to retain effective counterbalancing of the lid.

Some frictional resistance to pivotal movement of the lid is believed desirable so that, for example, gusts of wind do not cause an open trunk lid to swing downwardly, possibly injuring a user in the process of loading or unloading the trunk compartment. In general, a resistance of between 5 to 15 pounds, preferably about 10 pounds, is believed sufficient for that purpose. Such resistance may be readily provided by fitting a conventional spring wave washer 45 about the shank of hinge pin or rivet 22, and between washer 46 and the apertured end 21 of arm 16. The pin extends through aperture 47 and mounting plate 13, and then through end washer 48. Retention of the hinge pin 22 is achieved by swagging the end portion of the pin protruding beyond washer 48, although it is believed apparent that other means of retention might be provided.

The embodiment of Figure 9 is similar to the one already described except that the lateral deflection of spring 115 occurs not because of contact between the spring and a deflecting surface of mounting plate 114 but because coil 115a immediately adjacent hook portion 127 engages the enlarged end portion 121 of arm 116. When the lid 112 is in its partially-open position (corresponding to the position depicted in Figure 2), or in any position of greater opening, the spring 115 is in a linear condition. However, as the lid is pivoted from its partially-open position into its fully closed position (Figure 9), the spring-abutting surface of the end portion 121 of the arm deflects the spring downwardly to force its longitudinal axis into a downwardly-curved arcuate shape. The non-linear deflection of the spring substantially increases its tension so that for the limited arc of travel between a partially-closed (or partially-open) position and the fully-closed position of Figure 9, the spring tension is substantially greater than needed to counterbalance the weight of the trunk lid. In other structural and functional respects, the embodiment of Figure 9 is substantially the same as that of Figures 1-7.

## Claims

1. A hinge and spring assembly for the trunk lid of an automotive vehicle, comprising a mounting plate (14, 114) adapted to be secured to a body wall (17) of a vehicle ; a trunk lid connecting arm (16, 116) having a first end portion (21) pivotally mounted upon said plate (14, 114) for movement of said arm (16, 116) between a lowered position and a fully raised position ; said arm (16, 116) having a second end portion (25) adapted to be fixed to the underside of a trunk lid (12, 112) for movement of said lid (12, 112) between closed and open positions as said arm (16, 116) pivots between its lowered and fully raised positions ; a tension coil spring (15, 115) having one end connected to said arm (16, 116) at a point adjacent said first end portion (21) and having its opposite end (30) connected to said plate (14, 114) so that said spring (15, 115) is maintained in a longitudinally stretched and tensioned condition to exert a lifting force for offsetting the weight of a trunk lid (12, 112) when connected to said arm (16, 116) ; means (35, 121) mounted upon said plate for engaging at least one coil of said spring (15, 115) for laterally deflecting and distorting said spring (15, 115) to increase its lifting force over a limited arc of pivotal movement of said arm (16, 116) between said lowered position and an intermediate partially-raised position, thereby urging a trunk lid (12, 112) into a partially opened condition when unlatched.

2. An assembly as claimed in claim 1, in which said coil spring (15, 115) is oriented relative to said plate (14, 114) and arm (16, 116) to exert a lifting force equal to at least one half of the force needed to counterbalance the unsupported weight of a trunk lid (12, 112) connected to said arm (16, 116) at all angular positions of said arm (16, 116) between lowered and fully raised positions.

3. An assembly as claimed in claim 1 or 2, in which said opposite end (30) of said spring (15, 115) is adjustably connected to said plate (14, 114) for varying the length of said spring (15, 115) and thereby adjusting its tension.

4. An assembly as claimed in any one of the preceding claims, in which friction means (95) is provided at the pivotal mounting of said first end portion of said connecting arm (16, 116) and said plate (14, 114) for providing s selected amount of resistance to pivotal movement of said arm (16, 116) between said lowered and raised positions.

5. An assembly as claimed in any one of the preceding claims, in which said coil-engaging means comprises an abutment portion (35) of said plate (14) for laterally engaging said spring (15) only during said limited arc of movement of said arm (16) for causing non-linear deflection and substantially increased tension of said spring (15).

6. An assembly as claimed in any one of claims 1 to 4, in which said coil-engaging means comprises an abutment portion (121) of said first end portion of said arm (116) for laterally engaging said spring (115) only during said limited arc of movement of said arm (116) for causing non-linear deflection and substantially increased tension of said spring (115).

7. An assembly as claimed in claim 5 or 6, in which said abutment portion (35, 121) deflects said spring (15, 115) downwardly to force its longitudinal axis into a downwardly-curved configuration upon said lateral engagement between said abutment portion (35, 121) and said spring (15, 115).

8. An automotive vehicle having a body, a trunk compartment and opening therefor, a lid for closing said trunk opening, and a pair of hinge and spring assemblies as claimed in any one of claims 1 to 7, said mounting plates (14, 114) being secured to opposite sides of said vehicle within said trunk compartment.


**Patentansprüche**

1. Scharnier- und Federanordnung für den Kofferraumdeckel eines Kraftfahrzeugs
— mit einer Montageplatte (14, 114), die an einer Körperwand (17) des Fahrzeugs befestigbar ist,
— mit einem Kofferraumdeckelverbindungsarm (16, 116), der einen ersten Endabschnitt (21) aufweist, welcher schwenkbar auf der Platte (14, 114) für eine Bewegung des Arms (16, 116) zwischen einer abgesenkten Stellung und einer voll angehobenen Stellung angebracht ist,
— wobei der Arm (16, 116) einen zweiten Endabschnitt (25) hat, der an der Unterseite eines Kofferraumdekkels (12, 112) zur Bewegung des Deckels (12, 112) zwischen einer geschlossenen und einer offenen Stellung festlegbar ist, wenn der Arm (16, 116) zwischen seiner abgesenkten und voll angehobenen Stellung schwenkt,
— mit einer Zugschraubenfeder (15, 115), deren eines Ende mit dem Arm (16, 116) an einer Stelle angrenzend an den ersten Endabschnitt (21) verbunden ist und deren gegenüberliegendes Ende (30) mit der Platte (14, 114) so verbunden ist, daß die Feder (15, 115) in einem in Längsrichtung gedehnten und gespannten Zustand gehalten ist, um eine Hubkraft zum Kompensieren des Gewichts eines Kofferraumdeckels (12, 112) auszuüben, wenn sie mit dem Arm (16, 116) verbunden ist, und
— mit einer Einrichtung (35, 121), die auf der Platte für einen Eingriff mit wenigstens einer Windung der Feder (15, 115) zum seitlichen Biegen und Verwinden der Feder (15, 115) angebracht ist, um ihre Hubkraft über einen begrenzten Bogen einer Schwenkbewegung des Arms (16, 116) zwischen der abgesenkten Position und einer teilweise angehobenen Zwischenposition zu steigern, wodurch ein Kofferraumdeckel (12, 112) in eine teilweise geöffneten Zustand gedrückt wird, wenn er entriegelt ist.

2. Anordnung nach Anspruch 1, bei welcher die Schraubenfeder (15, 115) bezüglich der Platte (14, 114) und des Arms (16, 116) ausgerichtet ist, um eine Hubkraft auszuüben, die wenigstens der Hälfte der Kraft gleich ist, die benötigt wird, um das nicht abgestützte Gewicht eines Kofferraumdeckels (12, 112), der mit dem Arm (16, 116) verbunden ist, in allen Winkelstellungen des Arms (16, 116) zwischen der abgesenkten und der voll angehobenen Stellung auszugleichen.

3. Anordnung nach Anspruch 1 oder 2, bei welcher das gegenüberliegende Ende (30) der Feder (15, 115) mit der Platte (14, 114) einstellbar verbunden ist, um die Länge der Feder (15, 115) zu variieren, um dadurch ihre Spannung einzustelllen.

4. Anordnung nach einem der vorhergehenden Ansprüche, bei welcher eine Reibungseinrichtung (95) an der Schwenkhalterung des ersten Endabschnitts des Verbindungsarms (16, 116) und der Platte (14, 114) vorgesehen ist, um einen ausgewählten Grad des Widerstands für die Schwenkbewegung des Arms (16, 116) zwischen der abgesenkten und der angehobenen Stellung bereitzustellen.

5. Anordnung nach einem der vorhergehenden Ansprüche, bei welchem die an der Windung angreifende Einrichtung einen Anschlagabschnitt (35) der Platte (14) aufweist, um seitlich an der Feder (15) nur während eines begrenzten Bewegungsbogens des Arms (16) anzugreifen, damit eine nichtlineare Biegung und eine wesentlich erhöhte Spannung der Feder (15) herbeigeführt wird.

6. Anordnung nach einem der Ansprüche 1 bis 4, bei welcher die an der Windung angreifende Einrichtung einen Anschlagabschnitt (121) des ersten Endabschnitts des Arms (116) für ein seitliches Angreifen an der Feder (115) nur während eines begrenzten Bewegungsbogens des Arms (116) aufweist, damit eine nichtlineare Biegung und eine wesentlich erhöhte Spannung der Feder (115) herbeigeführt wird.

7. Anordnung nach Anspruch 5 oder 6, bei welcher der Anschlagabschnitt (35, 121) die Feder (15, 115) nach unten biegt, um ihre Längsachse in eine nach unten gekrümmte Gestalt bei dem seitlichen Eingriff zwischen dem Anschlagabschnitt (35, 121) und der Feder (15, 115) zu drücken.

8. Kraftfahrzeug mit einer Karosserie, mit einem Kofferraum und einer Öffnung dafür, mit einem Deckel zum Schließen der Kofferraumöffnung und mit einem Paar von Scharnierund Federanordnungen nach einem der Ansprüche 1 bis 7, wobei die Montageplatten (14, 114) auf gegenüberliegenden Seiten des Fahrzeugs in dem Kofferraum festgelegt sind.

## Revendications

1. Ensemble à charnière et ressort pour le couvercle d'un coffre à bagages d'un véhicule automobile, comprenant une plaque de montage (14, 114) adaptée pour être fixée à une paroi (17) de la carrosserie d'un véhicule ; un bras (16, 116) de raccordement du couvercle du coffre à bagages, possédant une première partie d'extrémité (21) montée pivotante sur ladite plaque (14, 114) pour déplacer ledit bras (16, 116) entre une position abaissée et une position complètement relevée ; ledit bras (16, 116) possédant une seconde partie d'extrémité (25) adaptée pour être fixée à la face inférieure d'un couvercle (12, 112) du coffre à bagages pour déplacer ledit couvercle (12, 112) entre des positions fermée et ouverte lorsque ledit bras (16, 116) pivote entre sa position abaissée et sa position complètement relevée ; un ressort hélicoïdal de traction (15, 115), dont une extrémité est raccordée audit bras (16, 116) en un point adjacent de ladite partie d'extrémité (21) et dont l'extrémité opposée (30) est raccordée à ladite plaque (14, 114) de sorte que ledit ressort (15, 115) est maintenu dans un état étiré et tendu longitudinalement pour exercer une force de soulèvement permettant de déplacer le poids d'un couvercle (12, 112) du coffre à bagages, lorsqu'il est raccordé audit bras (16, 116) ; des moyens (35, 121) montés sur ladite plaque pour venir en contact au moins avec une spire dudit ressort (15, 115) de manière à faire dévier latéralement et déformer ledit ressort (15, 115) de manière à accroître sa force de soulèvement sur un arc limité du mouvement de pivotement dudit bras (16, 116) entre ladite position abaissée et une position intermédiaire partiellement relevée, ce qui repousse un couvercle (12, 112) du coffre à bagages dans une position partiellement ouverte, lorsqu'il est déverrouillé.

2. Ensemble selon la revendication 1, dans lequel ledit ressort hélicoïdal (15, 115) est orienté par rapport à ladite plaque (14, 114) et audit bras (16, 116) de manière à exercer une force de soulèvement égale au moins à la moitié de la force nécessaire pour contrebalancer le poids non soutenu d'un couvercle (12, 112) du coffre à bagages, raccordé audit bras (16, 116) dans toutes les positions angulaires dudit bras (16, 116) entre la position abaissée et la position complètement relevée.

3. Ensemble selon la revendication 1 ou 2, dans lequel ladite extrémité opposée (30) dudit ressort (15, 115) est raccordée, d'une manière ajustable, à ladite plaque (14, 114) pour modifier la longueur dudit ressort (15, 115) et de ce fait régler sa tension.

4. Ensemble selon l'une quelconque des revendications précédentes, dans lequel des moyens de friction (95) sont prévus pour le montage à pivotement de ladite partie d'extrémité dudit bras de raccordement (16, 116) et de ladite plaque (14, 114) de manière à produire une valeur sélectionnée de résistance au mouvement de pivotement dudit bras (16, 116) entre lesdites positions abaissée et relevée.

5. Ensemble selon l'une quelconque des revendications précédentes, dans lequel lesdits moyens venant en contact avec la spire comprennent un élément de butée (35) de ladite plaque (14) destiné à s'appliquer latéralement contre ledit ressort (15) uniquement sur ledit arc limité de déplacement dudit bras (16) pour provoquer une déviation non linéaire dudit ressort (15) et un accroissement important de sa tension.

6. Ensemble selon l'une quelconque des revendications 1 à 4, dans lequel lesdits moyens venant en contact avec une spire comprennent un élément de butée (121) de ladite première partie d'extrémité dudit bras (116), destinée à s'appliquer latéralement contre ledit ressort (115) uniquement sur ledit arc limité de déplacement dudit bras (116) pour provoquer une déviation non linéaire dudit ressort (115) et accroître de façon importante sa tension.

7. Ensemble selon la revendication 5 ou 6, dans lequel ledit élément de butée (35, 121) fait dévier vers le bas ledit ressort (15, 115) de manière à amener à force son axe longitudinal à prendre une configuration incurvée vers le bas lors dudit contact latéral entre ledit élément de butée (35, 121) et ledit ressort (15, 115).

8. Véhicule automobile possédant une carrosserie, un coffre à bagages et une ouverture pour ce coffre, un couvercle destiné à fermer ladite ouverture du coffre à bagages et un couple d'ensembles à charnière et ressort tels que revendiqués dans l'une quelconque des revendications 1 à 7, lesdites plaques de montage (14, 114) étant fixées à des côtés opposés dudit véhicule à l'intérieur dudit coffre à bagages.

FIG. 1

FIG. 2

FIG. 3

FIG. 4

FIG. 5

FIG. 6

FIG. 7

FIG. 9

FIG. 8